# FASCICULE DE BREVET EUROPEEN

(11) **EP 2 148 346 B1**
(45) Date de publication et mention de la délivrance du brevet: **13.11.2013**
(21) Numéro de dépôt: 09166105.8
(22) Date de dépôt: 22.07.2009
(51) Int. Cl.: H01H 9/06, G05G 9/047

(54) **Manipulateur de conduite de véhicule**
Handbetätigter Fahrschalter zum Steuern eines Fahrzeugs
Vehicle steering control

(30) Priorité: 25.07.2008 FR 0855137
(43) Date de publication de la demande: 27.01.2010
(73) Titulaire: ALSTOM Transport SA, 92300 Levallois-Perret (FR)
(72) Inventeur: Miglianico, Denis, 69160, Tassin La Demi Lune (FR); Delemotte, Jean-Michel, 17000, La Rochelle (FR)
(74) Mandataire: Blot, Philippe Robert Emile

(56) Documents cités:
- EP-A- 1 400 426
- EP-A- 1 811 534
- DE-B3-102006 034 125
- US-A- 5 389 752

## Description

L'invention se rapporte à un manipulateur de conduite d'un véhicule, notamment un véhicule ferroviaire, et le procédé de manoeuvre correspondant, le manipulateur de conduite comportant un élément intégré de commande de Veille Automatique par Contrôle de Maintien d'Appui (VACMA).

Classiquement, les dispositifs de conduite de trains ou de tramways installés à bord des cabines de pilotage comportent un système VACMA de veille automatique par contrôle de maintien d'appui par lequel la vigilance du conducteur est régulièrement surveillée.

Le conducteur est astreint à maintenir appuyé un élément de commande, sous forme d'un bouton manuel ou d'une pédale pendant une durée comprise entre 15 et 60 secondes, puis à le relâcher régulièrement pendant une durée typiquement de 2 secondes à 5 secondes, de manière à vérifier que le conducteur n'est pas endormi voire décédé et à déclencher dans le cas d'un défaut de vigilance un arrêt d'urgence du véhicule.

Il est connu qu'une telle astreinte entraîne des contraintes de fatigue physique et psychique pour le conducteur pendant la conduite.

Dans le but d'améliorer l'ergonomie liée à la conduite du véhicule et à l'activation de la commande de veille automatique, le document EP 169 0820 A propose d'intégrer la commande veille automatique dans la poignée de conduite en traction et en freinage sous la forme d'une touche tactile.

Toutefois, le document ne décrit pas une architecture géométrique détaillée de l'ensemble poignée de conduite / touche tactile de commande de veille garantissant une ergonomie de qualité, c'est-à-dire entraînant un effort de tension / fléchissement musculaire minimal pour le conducteur.

L'état de la technique le plus proche est le document EP 1 400 426 révélant un manipulateur de conduite selon le préambule de la revendication 1.

Le problème technique est de déterminer une architecture géométrique de l'ensemble constitué par la poignée de conduite et de la touche tactile qui soit ergonomique pour un système VACMA.

A cet effet, l'invention a pour objet un manipulateur de conduite d'un véhicule comprenant un dispositif de traitement de veille automatique par contrôle de maintien d'appui et un bras de levier apte à se déplacer selon une direction d'actionnement prédéterminée avec, disposé sur une extrémité du bras, une poignée, de forme externe adaptée à la forme de la paume d'une main selon la revendication 1.

Suivant des modes particuliers de réalisation, le manipulateur de conduite comporte l'une ou plusieurs des caractéristiques suivantes :
- la poignée est symétrique par rapport à un plan de symétrie contenant la direction d'actionnement et la distance de la touche tactile au plan de symétrie est inférieur à 25 mm ;
- le manipulateur comprend un élément de support par rapport auquel la poignée est mobile et la poignée présente une position de référence dans laquelle le bras de levier est disposé normal par rapport au plan de l'élément de support et, dans la position de référence, la distance de la touche tactile à l'élément de support est inférieure ou égale à 95 mm ;
- la touche tactile est sensible au toucher ;
- l'angle a formé par le plan d'extension de l'élément support et le grand axe de la tête est compris entre 5 degrés et 85 degrés ;
- la poignée est creuse et la touche tactile est apte à être connecté électriquement à l'intérieur de la poignée par un câble électrique ;
- le bras de levier est creux de manière à fournir un passage à un câble électrique relié à la touche tactile, le passage étant inaccessible depuis l'extérieur ;
- le dispositif de traitement comprend un relais électromécanique ou un élément électronique apte à détecter un passage de courant lors d'un appui sur la touche tactile ; et
- le dispositif de traitement comprend un relais électromécanique ou un élément électronique apte à détecter une coupure de courant lors d'un appui sur la touche tactile.

L'invention sera mieux comprise à la lecture de la description d'une unique forme de réalisation qui va suivre, donnée uniquement à titre d'exemple et faite en se référant aux dessins sur lesquels :
- la Figure 1 est une vue en perspective d'un manipulateur de conduite selon l'invention,
- la Figure 2 est une vue latérale gauche du manipulateur de conduite de la figure 1,
- la Figure 3 est une vue arrière du manipulateur de conduite de la figure 1,
- la Figure 4 est une vue du positionnement d'une main d'un conducteur en position assise saisissant le manipulateur pendant une manoeuvre d'actionnement ou en l'absence de manoeuvre,
- la Figure 5 est une vue du positionnement d'une main d'un conducteur en position debout saisissant le manipulateur lors d'une manoeuvre d'actionnement vers l'arrière,
- la Figure 6 est une vue du positionnement d'une main d'un conducteur en position debout saisissant le manipulateur pendant une manoeuvre d'actionnement vers l'avant ou en l'absence de manoeuvre.

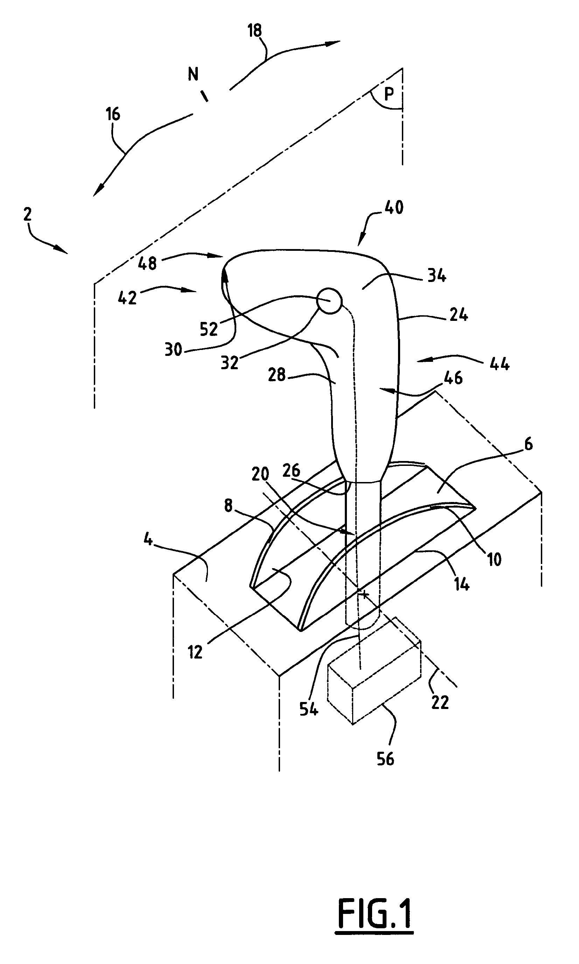

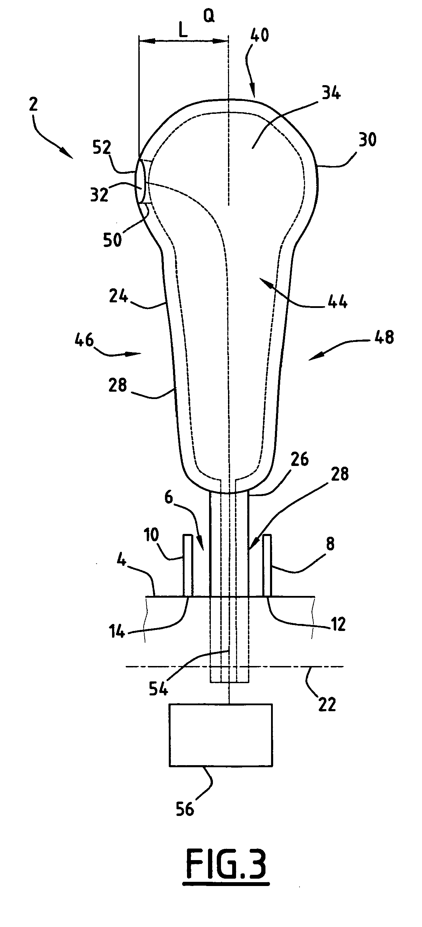

Un manipulateur de conduite 2 suivant les figures 1, 2 et 3 est installé mobile par rapport à un élément support 4 plan d'un pupitre de conduite installé à bord d'une cabine de pilotage.

Le manipulateur de conduite 2 est apte à être déplacé selon un mouvement de rotation dans les deux sens de faible amplitude contenu dans un plan de course d'extension P défini par une glissière 6.

La glissière 6 est délimitée par deux parois 8, 10 formant chacune une portion de disque. Chaque paroi 8, 10 comporte respectivement une tranche 12, 14 rectiligne formant une corde de la portion de disque associée et reposant sur l'élément de support 4.

Un sens de mouvement avant, respectivement arrière, représenté par la flèche 16, respectivement la flèche 18 correspond à un sens d'actionnement du manipulateur en traction du véhicule, respectivement de freinage du véhicule, une position neutre N intermédiaire étant définie et correspondant à une absence de commande de conduite.

Le manipulateur de conduite 2 comprend un bras de levier 20 apte à pivoter autour d'un axe 22 par rapport à l'élément de support 4, et une poignée 24, emmanchée sur une extrémité 26 du bras de levier 20 située du côté des deux parois 8, 10 de la glissière 8.

La poignée 24 comprend une embase 28 généralement cylindrique s'étendant suivant l'axe du bras de levier 20 dans laquelle est emmanchée l'extrémité 26. Elle comprend en outre une tête 30 de forme ovoïde surmontant l'embase et inclinée par rapport à celle-ci, et une touche tactile sensible au toucher 32.

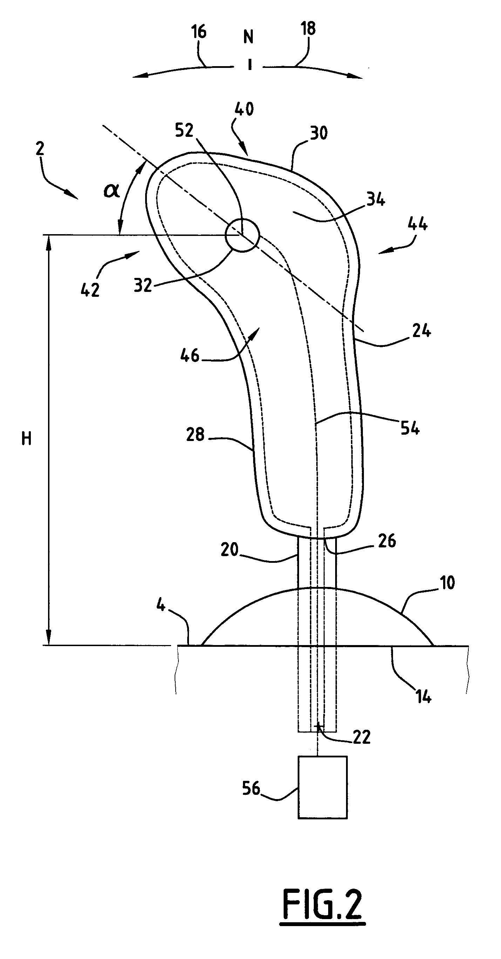

L'angle a, représenté sur la figure 2, formé par le plan d'extension de l'élément support 4 et le grand axe de la tête 30 de forme ovoïde est compris entre 5 degrés et 85 degrés.

La poignée 24 comprend une coque solide 34 avec cinq faces 40, 42, 44, 46, 48 dont une face de dessus 40 de la tête 30, une face latérale avant 42 orientée vers le sens de déplacement avant 16, une face latérale arrière 44 orientée vers le sens de déplacement arrière 18, une face latérale gauche 46 située vers la gauche en regardant vers l'avant 16, une face latérale droite 48 située vers la droite en regardant vers l'avant 16.

Les faces latérales gauche et droite 46, 48 sont symétriques par rapport à un plan de symétrie Q parallèle au plan de déplacement P et ici confondu avec ce dernier.

Les faces 40, 42, 44, 46, 48 sont des surfaces régulières raccordées de manière lisse par des congés.

La face de dessus 40 de la tête est par sa forme apte à être touchée à plat par la paume d'une main et à être enroulée sur sa partie raccordée à la face latérale avant 42 par les doigts de la même main, notamment l'index, le majeur et l'auriculaire.

La face arrière 44 est par sa forme sur sa partie de tête 30 raccordée à la face de dessus 40 apte à être poussée vers l'avant par la paume de main.

La face avant 42 est apte par sa forme sur sa partie de tête 30 raccordée à la face de dessus 40 à être tirée par les doigts notamment l'index vers l'arrière et apte à être enroulé sur sa partie embase 28 par les doigts notamment le majeur et l'auriculaire.

La touche tactile 32 sensible au toucher est disposée dans un trou 50 percé dans la coque 34 solide formant la structure porteuse de la poignée 24 et fixé de manière inamovible à la coque 34.

La touche tactile 32 comporte une surface tactile 52 fixe affleurant au niveau du bord du trou 50 formant arête avec la face latérale gauche 46 de la poignée 24.

La touche tactile 32 est située préférentiellement au niveau de la face latérale gauche 46 ou de la face latérale droite 48 de la poignée.

Le cas d'une disposition de la touche tactile 32 au niveau de la face latérale gauche 46, respectivement au niveau de la face latérale droite 48, correspond au cas représenté sur la figure 1 d'un poste pour le conducteur situé à gauche du manipulateur alors actionnable par la main droite, respectivement au cas non représenté d'un poste pour le conducteur situé à droite du manipulateur alors actionnable par la main gauche.

En variante, la touche tactile 32 est située au niveau de la face latérale avant 42 ou de la face latérale arrière 44.

La touche tactile 32 est située à une distance L du plan de symétrie Q inférieure ou égale à 25 mm.

La distance H de la touche tactile au plan de l'élément de support est inférieure ou égale à 95 mm.

La touche tactile 32 est connectée électriquement par un câble électrique 54 à un dispositif 56 de traitement de veille automatique à contrôle de maintien d'appui

Le bras de levier 20 et la poignée 24 sont creux de manière à fournir un passage au câble électrique 54 relié à la touche tactile 32, le passage étant inaccessible depuis l'extérieur lorsque le manipulateur est monté sur l'élément de support.

Le manipulateur 2 est démontable de l'élément de support 4.

Un système de veille automatique 60 selon l'invention comprend le manipulateur de conduite 2 décrit ci-dessus et le dispositif de traitement 56 de veille automatique VACMA.

Ainsi, l'accès aux éléments sensibles du système de veille automatique par contrôle de maintien d'appui lorsqu'il est installé, c'est-à-dire à la touche tactile 32, au câble électrique 54 et au dispositif de traitement 56 est protégé et toute tentative quelconque d'inhibition du système de veille 60 est ainsi empêchée.

En variante, la touche tactile 32 est couplée à un émetteur radiofréquence et le dispositif de traitement 56 comprend un récepteur radiofréquence apte à recevoir des signaux émis par l'émetteur radiofréquence.

La touche tactile 32 forme un condensateur dont la surface tactile 52 fixe constitue une face d'armature, le condensateur ayant une capacité variable en fonction de la présence ou non d'un contact de la peau d'un doigt sur la surface tactile 52 de la touche 32.

Le contact est assuré dès que le doigt touche ou dès que le doigt appuie sur la touche 32 avec une très faible pression sans la déformer.

La variation de capacité est mesurée de manière classique par l'application au travers du câble 54 et aux bornes du condensateur d'une tension variable fournie par une source de tension alternative intégrée au dispositif de traitement et par la mesure du courant circulant dans l'impédance montée en série présentée par le condensateur.

Le dispositif de traitement 56 comprend un relais électromécanique ou un élément électronique, par exemple un transistor, apte à détecter un passage de courant lors d'un appui sur la touche tactile 32.

En variante, le dispositif de traitement 56 comprend un relais électromécanique ou un élément électronique, par exemple un transistor apte à détecter une coupure de courant lors d'un appui sur la touche tactile.

Le dispositif de traitement 56 est apte à surveiller le respect du cycle VACMA par le conducteur et à vérifier que la touche tactile est régulièrement maintenue en contact avec au moins un des doigt pendant une durée comprise entre 15 et 60 secondes suivi d'un relâchement pendant une durée typiquement de 2 à 5 secondes. Ainsi, il est vérifié que le conducteur n'est pas endormi voire décédé et il est possible de déclencher dans le cas d'un défaut de vigilance un arrêt d'urgence du véhicule.

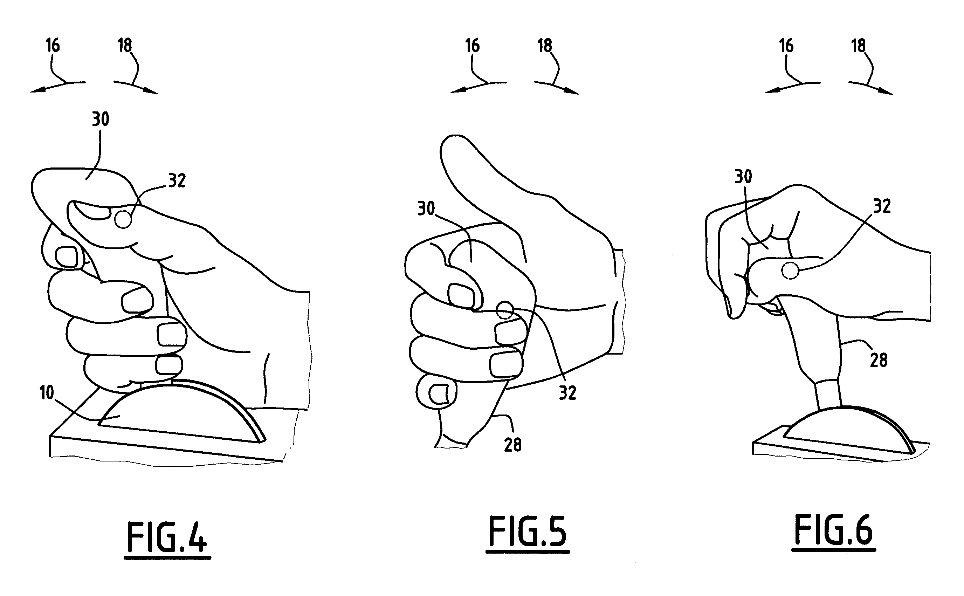

Sur la figure 4, une manoeuvre de conduite vers l'avant du manipulateur 2 est représentée pendant laquelle le conducteur du véhicule est en position assise et actionne le manipulateur 2 avec sa main droite.

Dans cette configuration, la main pousse la poignée 24 par la paume du pouce tandis les phalanges du majeur, de l'annulaire et de l'auriculaire enroulent l'embase de la poignée.

L'activation de la touche tactile 32 VACMA est mise en oeuvre naturellement par la phalange terminale du pouce qui vient presser avec un effort minimal sur la touche. De même le relâchement de la touche se fait avec un effort musculaire minimal.

L'exercice conjoint de la manoeuvre de conduite vers l'avant et l'activation de la veille automatique se fait également sans effort supplémentaire car aucune torsion du poignet n'est nécessaire, le plan défini par la poignée étant aligné avec le plan de course P du manipulateur.

Cette configuration est également ergonomique et applicable au cas d'une manoeuvre vers l'arrière.

La main est positionnée de la même façon par rapport à la poignée 24, seule la partie exerçant l'effort d'actionnement différant en ce que les phalanges arrière des majeur, annulaire et auriculaire exerçant un effort de poussée de la poignée vers l'arrière.

Cette configuration est également ergonomique et applicable au cas d'une absence de manoeuvre dans la position neutre N du manipulateur.

Sur la figure 4, une manoeuvre de conduite vers l'avant du manipulateur 2 est représentée pendant laquelle le conducteur est en position assise et actionne le manipulateur avec sa main droite.

Dans cette configuration, la main pousse la poignée par la paume du pouce tandis les phalanges du majeur, de l'annulaire et de l'auriculaire enroulant l'embase de la poignée.

L'activation de la touche tactile 32 VACMA est mise en oeuvre naturellement par la phalange terminale du pouce qui vient presser avec un effort minimal sur la touche. De même le relâchement de la touche se fait avec un effort musculaire minimal.

L'exercice conjoint de la manoeuvre de conduite vers l'avant et l'activation de la veille se fait également sans effort supplémentaire car aucune torsion du poignet n'est nécessaire, le plan défini par la poignée étant aligné avec le plan de course P du manipulateur.

Cette configuration est également ergonomique et applicable au cas d'une manoeuvre vers l'arrière.

La main est positionnée de la même façon par rapport à la poignée, seule la partie exerçant l'effort d'actionnement diffère en ce que les phalanges arrière des majeurs, annulaire et auriculaire exerçant un effort de poussée de la poignée vers l'arrière.

Cette configuration est également ergonomique et applicable au cas d'une absence de manoeuvre dans la position neutre N du manipulateur.

Sur la figure 5, une manoeuvre de conduite vers l'arrière du manipulateur 2 est représentée pendant laquelle le conducteur est en position debout et actionne le manipulateur avec sa main droite.

Dans cette configuration, la main pousse la poignée vers l'arrière par les phalanges de l'index, les phalanges arrière du majeur et de l'annulaire, tandis que le pouce est décollé de la tête de la poignée vers l'arrière et le haut. Les phalanges de l'index, de l'annulaire et de l'auriculaire enroulent l'embase de la poignée.

L'activation de la touche tactile 32 VACMA est mise en oeuvre naturellement par la phalange terminale du majeur qui vient presser avec un effort minimal sur la touche. De même le relâchement de la touche se fait avec un effort musculaire minimal du majeur.

L'exercice conjoint de la manoeuvre de conduite vers l'arrière et l'activation de la veille se fait également sans effort supplémentaire car aucune torsion du poignet n'est nécessaire, le plan défini par la poignée étant aligné avec le plan de course P du manipulateur.

Sur la figure 6, une manoeuvre de conduite vers l'avant 16 du manipulateur 2 est représentée pendant laquelle le conducteur est en position debout et actionne le manipulateur avec sa main droite.

Dans cette configuration, la main pousse la poignée 24 par la paume du pouce et les coussinets des doigts, l'ensemble des phalanges de doigts hormis le pouce recouvrant la tête 30 de la poignée 24 par la face de dessus 40, les phalanges du pouce enroulant l'embase 28 de la poignée 24.

L'activation de la touche tactile VACMA est mise en oeuvre naturellement par la phalange arrière du pouce qui vient presser avec un effort minimal sur la touche tactile 32. De même le relâchement de la touche 32 se fait avec un effort musculaire minimal.

L'exercice conjoint de la manoeuvre de conduite vers l'arrière et l'activation de la veille se fait également sans effort supplémentaire car aucune torsion du poignet n'est nécessaire, le plan défini par la poignée étant aligné avec le plan de la face de dessus en étant légèrement cassé, ce qui correspond à une position de repos du poignet.

Cette configuration est également ergonomique et applicable au cas d'une absence de manoeuvre dans la position neutre N du manipulateur.

Suivant les figures 1, 2, 3, 4, 5, 6, la touche tactile 32 est disposée sur la tête 30 de forme ovoïde au niveau d'une des deux faces latérales, ici la face latérale 46 parallèle au plan d'actionnement P contenant les directions d'actionnement 14, 16 et le grand axe de la tête 30 représenté en trait interrompu sur le figure 2.

L'axe traversant la touche tactile 32 perpendiculairement à la face latérale 46 au niveau de laquelle elle est disposée coupe le plan d'actionnement P en un point proche voire appartenant au grand axe de la tête 30 de forme ovoïde.

Ainsi, lors d'une transition de la main entre le mode de conduite, décrit suivant la figure 6 dans lequel la paume de la main est posée sur la face de dessus 40, et le mode de conduite, décrit suivant la figure 4 dans lequel la paume pousse ou les phalanges tirent le manipulateur, le pouce de la main reste de manière ergonomique en contact avec la touche tactile 32 sans aucun décollement de celui-ci pendant la transition. Le mouvement de torsion de la poignée requis pendant cette transition est un mouvement minimal en termes de course et d'effort.

## Revendications

1. Manipulateur de conduite d'un véhicule comprenant :
- un dispositif de traitement (56) de veille automatique par contrôle de maintien d'appui ;
- un bras de levier (20) apte à se déplacer selon une direction d'actionnement prédéterminée (16, 18) ; ,
- une poignée (24) disposée sur une extrémité (26) du bras (20) et de forme externe adaptée à la forme de la paume d'une main ;
la poignée (24) comportant :
une embase (28) généralement tubulaire s'étendant suivant l'axe du bras (20),
une tête (30), surmontant l'embase (28), de forme ovoïde et de grand axe incliné par rapport à l'embase (28),
une face de dessus (40) située sur la tête (30) et à l'opposé du bras de levier (20) par rapport à la poignée (24),
au moins une face latérale (42, 44, 46, 48) globalement perpendiculaire la face de dessus (40), et
une touche tactile (32) connectée électriquement au dispositif de traitement (56) de veille automatique par contrôle de maintien d'appui et disposée au niveau d'une face latérale (46, 48) parallèle au plan (P) d'actionnement contenant la direction d'actionnement (16, 18) et le grand axe de la tête (30),
**caractérisé en ce que** la touche tactile (32) est située sur la tête (30) de forme ovoïde.

2. Manipulateur de conduite selon la revendication 1, **caractérisé en ce qu'**un axe traversant la touche tactile (32) perpendiculairement à la face latérale (46, 48) au niveau de laquelle elle est disposée coupe le plan d'actionnement (P) en un point proche ou appartenant au grand axe de la tête (30).

3. Manipulateur de conduite selon l'une des revendications 1 à 2, **caractérisé en ce que** la poignée (24) est symétrique par rapport à un plan de symétrie (Q) contenant la direction d'actionnement (16, 18) et la distance (L) de la touche tactile (32) au plan de symétrie (Q) est inférieur à 25 mm.

4. Manipulateur de conduite selon l'une des revendications 1 à 3, **caractérisé en ce que** la touche tactile (32) est sensible au toucher.

5. Manipulateur de conduite selon l'une des revendications 1 à 4, **caractérisé en ce qu'**il comprend un élément de support (4) par rapport auquel la poignée est mobile et la poignée (24) présente une position de référence dans laquelle le bras de levier est disposé normal par rapport au plan de l'élément de support (4) et **en ce que**, dans la position de référence, la distance (H) de la touche tactile (32) à l'élément de support (6) est inférieure ou égale à 95 mm.

6. Manipulateur de conduite selon la revendication 5, **caractérisé en ce que** l'angle α formé par le plan d'extension de l'élément support (4) et le grand axe de la tête (30) est compris entre 5 degrés et 85 degrés.

7. Manipulateur de conduite selon l'une des revendications 1 à 6, **caractérisé en ce que** la poignée (24) est creuse et la touche tactile (32) est apte à être connecté électriquement à l'intérieur de la poignée (24) par un câble électrique (54).

8. Manipulateur selon l'une des revendications 1 à 7, **caractérisé en ce que** le bras de levier (20) est creux de manière à fournir un passage à un câble électrique relié à la touche tactile, le passage étant inaccessible depuis l'extérieur.

9. Manipulateur selon l'une quelconque des revendications 1 à 8, **caractérisé en ce que** le dispositif de traitement (56) comprend un relais électromécanique ou un élément électronique apte à détecter un passage de courant lors d'un appui sur la touche tactile (32).

10. Manipulateur selon l'une quelconque des revendications 1 à 8, **caractérisé en ce que** le dispositif de traitement (56) comprend un relais électromécanique ou un élément électronique apte à détecter une coupure de courant lors d'un appui sur la touche tactile (32).

## Patentansprüche

1. Fahrschalteinrichtung für ein Fahrzeug, aufweisend:
eine Verarbeitungsvorrichtung (56) für eine Sicherheitsfahrschaltung,
einen Hebelarm (20), der eingerichtet ist, sich gemäß einer vorbestimmten Betätigungsrichtung (16, 18) zu bewegen,
einen Griff (24), der an einem Ende (26) des Armes (20) angeordnet ist, und dessen äußere Form an die Form einer Handfläche angepasst ist,
der Griff (24) aufweisend:
eine im Allgemeinen rohrförmige Basis (28), welche sich entlang der Achse des Armes (20) erstreckt,
einen eiförmigen Kopf (30), der über die Basis (28) hinausragt, mit einer bezüglich der Basis (28) geneigten Hauptachse,
eine Oberseite (40), die sich auf dem Kopf (30) befindet, und sich bezüglich des Griffs (24)entgegengesetzt des Hebelarms (20) befindet,
mindestens eine laterale Seite (42, 44, 46, 48), die im Wesentlichen senkrecht zur Oberseite (40) ist, und
eine Sensortaste (32), welche elektrisch verbunden ist mit der Verarbeitungsvorrichtung (56) der Sicherheitsfahrschaltung, und auf der Höhe einer lateralen Seite (46, 48) parallel zur Betätigungsebene (P) angeordnet ist, welche die Betätigungsrichtung (16, 18) und die Hauptachse des Kopfes (30) umfasst,
**gekennzeichnet dadurch, dass** sich die Sensortaste (32) an dem eiförmigen Kopf (30) befindet.

2. Fahrschalteinrichtung gemäß Anspruch 1, **gekennzeichnet dadurch, dass** eine Achse, welche die Sensortaste (32) senkrecht zur lateralen Fläche (46, 48) durchdringt, auf deren Höhe sie angeordnet ist, die Aktionsebene (P) an einem nahegelegenen Punkt schneidet oder zur Hauptachse des Kopfes (30) gehört.

3. Fahrschalteinrichtung gemäß einem der Ansprüche 1 oder 2, **gekennzeichnet dadurch, dass** der Griff (24) symmetrisch ist bezüglich einer Symmetrieebene (Q), welche die Betätigungsrichtung (16, 18) enthält, und die Distanz (L) der Sensortaste (32) zur Symmetrieebene (Q) kleiner als 25 mm ist.

4. Fahrschalteinrichtung gemäß einem der Ansprüche 1 bis 3, **gekennzeichnet dadurch, dass** die Sensortaste (32) berührungsempfindlich ist.

5. Fahrschalteinrichtung gemäß einem der Ansprüche 1 bis 4, **gekennzeichnet dadurch, dass** die Fahrschalteinrichtung ein Stützelement (4) aufweist, bezüglich zu welchem der Griff bewegbar ist, und der Griff (24) eine Referenzposition aufweist, in welcher der Hebelarm bezüglich der Ebene des Stützelements (4) normal angeordnet ist, und dadurch, dass in der Referenzposition die Distanz (H) der Sensortaste (32) zum Stützelement (6) kleiner oder gleich 95 mm ist.

6. Fahrschalteinrichtung gemäß Anspruch 5, **gekennzeichnet dadurch, dass** der Winkel α, welcher durch die Erstreckungsebene des Stützelements (4) und der Hauptachse des Kopfes (30) gebildet wird, zwischen 5 Grad und 85 Grad beträgt.

7. Fahrschalteinrichtung gemäß einem der Ansprüche 1 bis 6, **gekennzeichnet dadurch, dass** der Griff (24) hohl ist und die Sensortaste (32) eingerichtet ist, um über ein elektrisches Kabel mit dem Inneren des Griffs (24) elektrisch verbunden zu sein.

8. Fahrschalteinrichtung gemäß einem der Ansprüche 1 bis 7, **gekennzeichnet dadurch, dass** der Hebelarm (20) derart hohl ist, um einen Durchgang zu einem elektrischen Kabel zu ermöglichen, welches mit der Sensortaste verbunden ist, wobei der Durchgang von außen nicht erreichbar ist.

9. Fahrschalteinrichtung gemäß irgendeinem der Ansprüche 1 bis 8, **gekennzeichnet dadurch, dass** die Verarbeitungsvorrichtung (56) ein elektromechanisches Relais oder ein elektronisches Element aufweist, welches eingerichtet ist, nach Betätigen der Sensortaste (32) einen Stromfluss zu detektieren.

10. Fahrschalteinrichtung gemäß irgendeinem der Ansprüche 1 bis 8, **gekennzeichnet dadurch, dass** die Verarbeitungsvorrichtung (56) ein elektromechanisches Relais oder ein elektronisches Element aufweist, welches eingerichtet ist, nach Betätigen der Sensortaste (32) einen Stromausfall zu detektieren.

## Claims

1. Vehicle driving control comprising:
- a dead man's system processing device (56) and
- a lever arm (20) which is capable of moving in a predetermined actuation direction (16, 18)
- a handle (24) disposed at one end (26) of the arm (20) and having an outer shape which is adapted to the shape of the palm of a hand,
the handle (24) comprising:
- a generally tubular base (28) which extends along the axis of the arm (20),
- a head (30), fitted upon the base (28), with an ovoid shape and a major axis which is inclined relative to the base (28),
- an upper face (40) which is located on the head (30) and opposite the lever arm (20) relative to the handle (24), and
- at least one lateral face (42, 44, 46, 48) which is generally perpendicular relative to the upper face (40), and
- a touch button (32) which is electrically connected to the dead man's system processing device (56), and which is located in the region of one lateral face (46, 48) which is parallel with the actuation plane (P) which contains the actuation direction (16, 18) and the major axis of the head (30),
**characterized in that** the touch button (32) is located on the head (30) which has an ovoid form.

2. Driving control according to claim 1, **characterized in that** an axis passing through the touch button (32) and perpendicular to the lateral face (46, 48) at which the touch button is located, intersects the actuation plane (P) at a point close to or belonging to the major axis of the head (30).

3. Driving control according claim 1 or 2, **characterized in that** the handle (24) is symmetrical relative to a plane of symmetry (Q) which contains the actuation direction (16, 18) and the distance (L) from the touch button (32) to the plane of symmetry (Q) is less than 25 mm.

4. Driving control according to any one of claims 1 to 3, **characterized in that** the touch button (32) is touch-sensitive.

5. Driving control according to any one of claims 1 to 4, **characterized in that** it comprises a support element (4) relative to which the handle can be moved and the handle (24) has a reference position in which the lever arm is arranged so as to be normal relative to the plane of the support element (4), and, **in that** in the reference position, the distance (H) from the touch button (32) to the support element (4) is less than or equal to 95 mm.

6. Driving control according to claim 5, **characterized in that** the angle α which is formed by the extension plane of the support element (4) and the major axis of the head (30) is between 5 degrees and 85 degrees.

7. Driving control according to any one of claims 1 to 6, **characterized in that** the handle (24) is hollow and the touch button (32) is capable of being electrically connected to the inner side of the handle (24) by means of an electric cable (54).

8. Control according to any one of claims 1 to 7, **characterized in that** the lever arm (20) is hollow in order to provide a passage for an electric cable which is connected to the touch button, the passage being inaccessible from the outer side.

9. Control according to any one of claims 1 to 8, **characterized in that** the processing device (56) comprises an electromechanical relay or an electronic element which is capable of detecting a passage of current when the touch button (32) is pressed.

10. Control according to any one of claims 1 to 8, **characterized in that** the processing device (56) comprises an electromechanical relay or an electronic element which is capable of detecting an interruption of current when the touch button (32) is pressed.
